**Europäisches Patentamt**

**European Patent Office**

**Office européen des brevets**

(11) Publication number: **0 177 140**
**B1**

# (12) EUROPEAN PATENT SPECIFICATION

(45) Date of publication of patent specification: **02.01.91**

(21) Application number: **85305548.1**

(22) Date of filing: **05.08.85**

(51) Int. Cl.⁵: **A 23 L 1/36**

(54) **Food products and methods.**

(30) Priority: **03.10.84 JP 206192/84**

(43) Date of publication of application:
**09.04.86 Bulletin 86/15**

(45) Publication of the grant of the patent:
**02.01.91 Bulletin 91/01**

(84) Designated Contracting States:
**AT BE CH DE FR GB IT LI NL SE**

(56) References cited:
**DE-A-1 692 600**
**DE-A-1 931 677**
**DE-C-1 031 107**
**US-A-3 740 236**

(73) Proprietor: **Ensuiko Sugar Refining Company, Limited**
**13-46, Daikokucho Tsurumi-ku Yokohama-shi Kanagawa-ken,230 (JP)**

(73) Proprietor: **Nagano, Teruo**
**52-1-5-305, 4-chome, Saiwai-cho Tachikawa-shi Tokyo (JP)**

(73) Proprietor: **Shibata, Takuzo**
**17-31, 4-chome, Shiba Kawaguchi-shi Saitama-ken (JP)**

(72) Inventor: **Hashimoto, Hitoshi**
**31-10, 4-chome Imaizumidai Kamakura-shi Kanagawa-ken (JP)**
Inventor: **Shibata, Takuzo**
**17-31, 4-chome, Shiba Kawaguchi-shi Saitama-ken (JP)**
Inventor: **Nagano, Teruo**
**52-1-5-305, 4-chome Saiwai-cho Tachikawa-shi Tokyo (JP)**
Inventor: **Hara, Kozo**
**6-3-104, 2-chome, Namiki Kanazawa-ku Yokohama-shi Kanagawa-ken (JP)**
Inventor: **Kuwahara, Nobuhiro**
**No. 2493-10-D-801, Fujisawa Fujisawa-shi Kanagawa-ken (JP)**

Courier Press, Leamington Spa, England.

**EP 0 177 140 B1**

(72) Inventor: **Yashiki, Ikuo Senmarudaidanchi 2506, No. 350**
**Arai-cho Hodogaya-ku**
**Yokohama-shi Kanagawa-ken (JP)**

(74) Representative: **SERJEANTS**
**25, The Crescent King Street**
**Leicester, LE1 6RX (GB)**

# EP 0 177 140 B1

## Description

### Technical Field

The invention relates to food products comprising nuts and/or seed, and to a method for their production by pulverization, granulation and/or agitation so as to provide a coating with a protective layer.

Nuts contain lipids to an extent of from 47 to 77% while seeds contain lower amounts usually from 30 to 55%. They have a high calorific value — 500 kilocalories (kcal)/100 grams or larger so they are important foods with high nutritive value. The high lipid content has a disadvantage that the fats and oils are susceptible to oxidation in air. This causes deterioration in taste and flavour, so long-term storage should be avoided. Absorbtion of moisture accelerates oxidation and damages the characteristically pleasant touch to the tongue and teeth.

Nuts and seeds are used as additives in cooking and confectionery, or eaten as such. They may be served in their original form or in the form of relatively coarse grains, or processed into a paste such as peanut butter. No successful method has yet been developed for obtaining a dry powder of nuts because pulverization leads to a paste containing a large amount of lipids owing to exudation of oil matter. Even when nuts are coarsely ground, oxidation during storage is unavoidable, and greatly decreases the commercial value. The documents DE—A—1931677 and US—A—3740236 relate to the treatment of partially defatted nuts and refer to their reconstitution to provide an improved product. A binder comprising dextrin is combined with defatted nuts.

### The Invention

According to the invention, nuts, seeds or particles thereof are coated with a layer of a cyclodextrin.

The kind of nuts and seeds to which the invention is applicable is not restricted. Examples are listed below together with their principal constituents in % by weight. They can be used singly or in a combination of two or more.

(1) Almond, dried: water 5%, lipids 55%, protein 19%, and minerals (per 100 g) comprising potassium 860 mg, calcium 230 mg, magnesium 260 mg and phosphorus 500 mg.

(2) Cashew nuts, roasted: water 4%, lipids 47%, (comprising 60% oleic acid, 18.4% linoleic acid, 10.5% palmitic acid and 9% stearic acid), protein 20% and saccharides 25%.

(3) Walnuts, roasted: water 4%, lipids 64% and proteins 15%.

(4) Brazil nuts, roasted: water 5%, lipids 65% and protein 17%.

(5) Pecans, roasted: lipids 70%.

(6) Hazelnuts, roasted: water 5%, lipids 59% and protein 13%.

(7) Macadamia nuts, roasted: lipids 77% and protein 8%.

(8) Peanuts, dried: water 6%, lipids 47% and protein 25%.

(9) Pistachio nuts, dried: water 5%, lipids 54% and protein 21%.

(10) Pumpkin seeds, dried: water 5%, lipids 52% (comprising 52% linoleic acid, 27% oleic acid, 13% palmitic acid and 5% stearic acid), protein 27% and ash 4.7%.

(11) Sesame seeds, dried: water 5%, lipids 50% (comprising from 40 to 45% linoleic acid, from 37 to 42% oleic acid, from 9 to 12% palmitic acid and 5% stearic acid) and protein 20%.

(12) Watermelon seeds, dried: water 6%, lipids 46% (comprising 66% linoleic acid, 14% oleic acid, 9% palmitic acid and 7% stearic acid) and protein 30%.

(13) Sunflower seeds, dried: water 4%, lipids 55% (comprising 62% linoleic acid, 22% oleic acid, 8% palmitic acid and 5% stearic acid) and protein 20%.

Cyclodextrin is a cyclic oligosaccharide formed of several glucose units bonded together through α-1,4-linkages. Cyclodextrins formed of 6, 7 and 8 glucose units are called α-, β- and γ-cyclodextrins, respectively. A single cyclodextrin or combination of two or more or a mixture with other substances such as branched dextrins, for example, can be used according to need.

Cyclodextrins are oleophilic on the inside of the cyclic structure but hydrophilic on the outside. Various kinds of oil materials are taken into the hollow space in the cyclic molecular structure and stabilized therein. The oily material in nuts etc. is absorbed by the cyclodextrin to form a stable clathrate, so a uniform and stable powdery or granular product can be obtained.

The amount of cyclodextrin used is preferably from 0.1 to 300% by weight based on the nuts or seeds or particles.

Quantities of ingredients are consistently expressed in this manner herein. When a powdery product is desired, cyclodextrin in an amount from 10 to 300%, or preferably from 50 to 150% may be used, together with water in an amount from 200 to 1000%, or preferably from 500 to 700%. The mixture may be comminuted in a homogenizer or a grinding machine, and spray dried to give a fine and uniform powdery product. In order to obtain a fuller flavour, pulverization may be preceded by roasting or frying of coarsely ground nuts or edible seeds. When a granular product is desired, such a powdery product may be formed into granules of desired size, for example in a fluidized-bed granulator. A granular product of larger granule size can be obtained from coarsely ground nuts of seeds by agitation in a mixer under a spray of an aqueous solution of a cyclodextrin followed by drying. In this case, the amount of cyclodextrin should be from 1 to 10%, or preferably from 4 to 6%. The product is storable over a long period by virtue of the protection of the oil material against oxidation by the atmospheric oxygen.

3

# EP 0 177 140 B1

A variety of food bases such as semiprocessed, frozen food and minced meat, a frosting powder for certain dishes, a base material of snack food and noodles and the like are only a part of the possible applications of products according to the invention.

## Example 1

One part of cashew nuts was coarsely ground in a crusher, and roasted at 170°C for 15 min. The roasted grains were mixed with 0.5 part of cyclodextrin, which was a 50:50 mixture of a cyclodextrin and a branched dextrin, together with 8 parts of water and homogenized for 5 min. The flowable mixture thus obtained was dried into powdery form in a disk-type spray drier with a disk rotating at 10,000 r.p.m. and hot air at 190°C at the inlet and 120°C at the outlet. The powdery product was completely dry and had excellent flowability.

## Example 2

Hamburger steaks for school lunch were prepared from a base admixed with 2% of the powdered cashew nuts obtained as in Example 1 and served for tasting by 20 boys and 22 girls of a first-year class of an elementary school. Such hamburger steaks without seasoning were not favourites with the children, and usually eaten with a large volume of Worcester sauce or ketchup. The children were asked to eat hamburger steaks prepared with powdered cashew nuts and half the usual volume of the ketchup, and to make a comparison with those prepared of the base alone for taste and flavour. The preference of the children was predominantly for the admixture with cashew nuts as is shown in Table 1 below.

### TABLE 1

|  | Boys | Girls | Total |
|---|---|---|---|
| Children who preferred hamburger steaks with cashew nuts (half volume of ketchup) | 17 | 20 | 37 |
| Children who preferred hamburger steaks without powdery cashew nuts (full volume of ketchup) | 3 | 2 | 5 |

## Example 3

Dried Brazil nuts were ground in a crusher into coarse grains, of which a portion was dried as such and reserved for a storage test. The remainder was introduced into a ribbon mixer and agitated for 30 min under a spray of 40% aqueous solution of the cyclodextrin used in Example 1 in such a volume as to give 5% of the cyclodextrin based on the nuts. The mixture was dried for 1 h at 60°C in a hot-air drying oven to give a granulated product. This granulated product and the untreated product were subjected to a comparative storability test by visual inspection and the determination of the peroxide value (POV) by the iron rhodanide method. The results are in Table 2.

### TABLE 2

| Storage Time | Item | As crushed | Sprayed with cyclodextrin solution |
|---|---|---|---|
| 10 days | POV | 0.12 | 0.01 |
|  | Appearance | Somewhat moist | Absolutely dry |
| 20 days | POV | 0.38 | 0.03 |
|  | Appearance | Somewhat moist | Absolutely dry |
| 30 days | POV | 0.65 | 0.06 |
|  | Appearance | Clammy | Absolutely dry |
| 60 days | POV | 0.99 | 0.07 |
|  | Appearance | Clammy | Absolutely dry |
| 90 days | POV | — | 0.11 |
|  | Appearance | — | Almost unchanged but slightly moist |

4

The treated product retains its initial condition almost unchanged even after 3 months storage. On the other hand, the POV of the untreated product exceeds 0.3 after 20 days storage, and this means that it is considered to have no commercial value.

## Example 4

One part of pumpkin seeds was roasted at 170°C for 15 min. A 20% aqueous solution of one part of the cyclodextrin used in Example 1 was circulated through a wet grinding machine. The roasted pumpkin seeds were introduced and ground in the circulating cyclodextrin solution. (The lipids of the pumpkin seeds were absorbed by the cyclodextrin to form a clathrate). The emulsion thus obtained, consisting of the pumpkin seeds and cyclodextrin, was dried into powdery form by a nozzle-type spray drier with hot air at 180°C at the inlet and from 90 to 95°C at the outlet, and a flow rate of 130 litres per h. The powdery product obtained was completely dry and had excellent flowability and stability.

## Example 5

Sunflower seeds were roasted at 170°C for 15 min in a gas-oven and then ground in a crusher into coarse grains. A portion was dried and reserved for a storage test. The remainder was introduced into a fluidized-bed granulator. Hot air at 60°C was introduced from a lower portion of the granulator to fluidize the sunflower seeds. A 40% aqueous solution of the cyclodextrin used in Example 1 was sprayed in such a volume as to give 10% of the cyclodextrin based on the seeds from an upper portion of the granulator to coat the surface of the seeds. Drying gave a granulated product of sunflower seeds. The granulated product thus obtained and the untreated test by the determination of the POV. The POV value of the treated product was from about 5 to 8 meg/kilogram and retained its initial condition almost unchanged even after 6 months storage. On the other hand, the POV of the untreated product exceeds 30 meg/kilogram after only 1 month of storage, which meant it had no commercial value.

## Claims

1. A food product comprising nuts or seeds or particles thereof characterized by a coating layer of a cyclodextrin.

2. A product according to claim 1, wherein the amount of the cyclodextrin is from 0.1 to 300% by weight based on the nuts or seeds or particles thereof.

3. A product according to claim 2, wherein the amount of the cyclodextrin is from 50 to 150% as aforesaid.

4. A product according to any preceding claim containing almonds, cashew nuts, walnuts, Brazil nuts, pecans, hazelnuts, Macadania nuts, peanuts or pistachio nuts or particles thereof.

5. A product according to any of claims 1 to 3 containing pumpkin, sesame, watermelon or sunflower seeds or particles thereof.

6. A method of manufacturing a food product according to any preceding claim, which comprises mechanical grinding of the nuts or seeds with the cyclodextrin.

7. A method according to claim 6 in which the grinding is with water to form a flowable mixture, and the mixture is spray dried.

## Patentansprüche

1. Nahrungsmittelprodukt umfassend Nüsse oder Samen oder Teile davon, gekennzeichnet durch eine Überzugsschicht aus einem Cyclodextrin.

2. Produkt nach Anspruch 1, worin die Menge des Cyclodextrin von 0,1 bis 300 Gew.% bezogen auf die Nüsse oder Samen oder Teil davon beträgt.

3. Produkt nach Anspruch 2, worin die Menge des Cyclodextrin von 50 bis 150% wie oben erwähnt beträgt.

4. Produkt nach einem der vorhergehenden Ansprüche, enthaltend Mandeln, Cashewnüsse, Walnüsse, Brasilianische Nüsse, Pecannüsse, Haselnüsse, Macadania Nüsse, Erdnüsse oder Pistazien oder Teile davon.

5. Produkte nach einem der Ansprüche 1 bis 3, enthaltend Kürbis-, Sesam-, Wassermelonen- oder Sonnenblumensamen oder Teile davon.

6. Verfahren zur Herstellung eines Nahrungsmittelproduktes nach jedem der vorangegangenen Ansprüche, welches mechanisches Zermahlen der Nüsse oder Samen mit Cyclodextrin umfaßt.

7. Verfahren nach Anspruch 6, worin das Zermahlen mit Wasser durchgeführt wird, um ein fließbares Gemisch zu bilden, und das Gemisch sprühgetrocknet wird.

## Revendications

1. Produit alimentaire comprenant des noix, des graines ou des particules de celles-ci, caractérisé par une couche d'enrobage d'une cyclodextrine.

2. Produit selon la revendication 1, dans lequel la quantité de cyclodextrine est de 0,1 à 300% en poids, par rapport aux noix, aux graines ou à leurs particules.

3. Produit selon la revendication 2, dans lequel la quantité de cyclodextrine est de 50 à 150%, calculé comme ci-dessus.

4. Produit selon l'une quelconque des revendications précédentes, contenant des amandes, noix de cajou, noix de noyer, noix du Brésil, noix de Pécan, noisettes, noisettes de macadamia, cacahuètes ou pistaches, ou des particules de celles-ci.

5. Produit selon l'une quelconque des revendications 1 à 3, contenant des graines de courges, de sésame, de pastèque ou de tournesol, ou des particules de celles-ci.

6. Procédé de fabrication d'un produit alimentaire selon l'une quelconque des revendications précédentes, qui comprend un broyage mécanique des noix ou graines avec de la cyclodextrine.

7. Procédé selon la revendication 6, dans lequel le broyage est effectué avec de l'eau pour former un mélange fluide, et le mélange est séché par atomisation.